## Europäisches Patentamt
## European Patent Office
## Office européen des brevets

(19)

(11) Publication number : **0 337 356 B1**

(12)

# EUROPEAN PATENT SPECIFICATION

(45) Date of publication of patent specification :
17.06.92 Bulletin 92/25

(51) Int. Cl.⁵ : **F16D 35/00, B60K 17/35**

(21) Application number : **89106330.7**

(22) Date of filing : **10.04.89**

(54) **Viscous coupling.**

(30) Priority : **11.04.88 JP 47758/88 U**

(43) Date of publication of application :
**18.10.89 Bulletin 89/42**

(45) Publication of the grant of the patent :
**17.06.92 Bulletin 92/25**

(84) Designated Contracting States :
**AT DE FR GB IT**

(56) References cited :
**DE-C- 3 725 103
US-A- 4 064 980**

(73) Proprietor : **VISCODRIVE JAPAN LTD
Toranomon Center Building 8th floor 16-17
Toranomon 1-chome Minatu-ku
Tokyo (JP)**

(72) Inventor : **Sayama, Masayuki
c/o Tochigifujisangyo K.K. 2388 Ohmiya-machi
Tochigi-shi Tochigi-ken (JP)**

(74) Representative : **Harwardt, Günther, Dipl.-Ing.
et al
Postfach 14 55 Scheerengasse 2
W-5200 Siegburg 2 (DE)**

EP 0 337 356 B1

Jouve, 18, rue Saint-Denis, 75001 PARIS

## Description

## BACKGROUND OF THE INVENTION

### Field of the Invention

The present invention relates to a viscous coupling according to the preamble of Claim 1. Couplings utilizing viscous fluid are useful for the power transmission system of a vehicle.

### Description of the Background Art

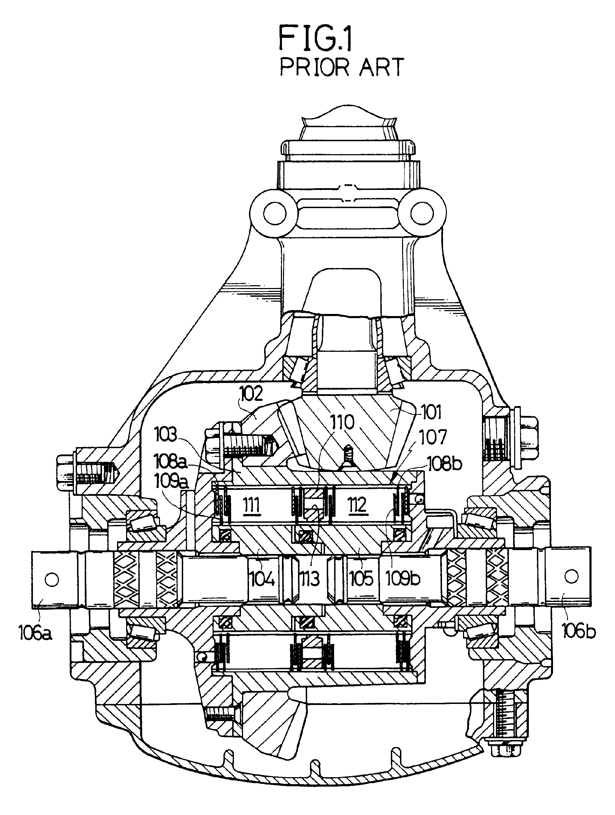

One conventional viscous coupling is shown in Fig. 1, which can be found in 'Automobile Engineering' June, 1987 Edition, published by Tetsudo-Nippon Co.

This viscous coupling of Fig. 1 is used in a four wheel drive vehicle of front engine,front drive type (FF type) instead of a rear wheel differential device. Thus, there is a driving pinion gear 101 to which torque from the engine is transmitted through a propeller shaft. This driving pinion gear 101 is engaged with a ring gear 102 attached on a diff case 103. Inside the diff case 103 there are first an second hubs 104 and 105 which are relatively coaxially rotatable and which are connected to left and right rear wheel driving shafts 106a and 106b respectively. The diff case 103 and the first and second hubs 104 and 105 form a working chamber 107 in which viscous fluid is confined. Inside this working chamber 107 there is a plurality of first left and right plates 108a and 108b which are spline connected to the diff case 103 opposite to the first and second hubs 104 and 105 respectively. In addition, there is a plurality of second left and right plates 109a and 109b which are spline connected to the first and second hubs 104 and 105 respectively such that each of the second plate is between two adjacent first plates. The working chamber 107 is divided into first and second chambers 111 and 112, by a central divider 110 which has a hole 113 connecting the first and second chambers 111 and 112.

When the vehicle is running on a high friction road, the torque from the engine is transmitted to a front wheel driving shaft. In this case, there is no difference in the rotational speed between the front wheels and rear wheels so that the viscous coupling between the propeller shaft and the rear wheel driving shafts 106a and 106b does not operate and the vehicle runs is front wheel drive mode.

On the other hand, in a situation where the front wheels skid on a low friction road, there appears a large difference in rotational speed between the front and rear wheels. In such a situation, the diff case 103 connected to the front wheel driving shaft rotates faster than the left and right rear wheel driving shafts 106a and 106b, so that there is relative rotation between the first left and right plates 108a and 108b connected to the diff case 103 and the second left and right plates 109a and 109b, connected to the left and right rear wheel driving shafts 106a and 106b, which in turn shear through the viscous fluid inside the working chamber 107. The resulting torque due to the shear force of the viscous fluid is transmitted to the left and right rear wheel driving shafts 106a and 106b and provides power for the vehicle to escape from a skid.

Similarly, when the left rear wheel skids, there appears a difference in rotational speed between the diff case 103 and the second hub 105 connected to the right rear wheel driving shaft 106b and consequently there is a relative rotation between the first right plates 108b connected to the diff case 103 and the second plates 109b,connected to the right rear wheel driving shaft 106b, which in turn shear through the viscous fluid inside the second chamber 112. The resulting torque due to the shear force of the viscous fluid is transmitted to the right rear wheel driving shaft 106b to provide power to allow the vehicle to escape from the skidding of the left rear wheel of the vehicle.

Here, however, in a conventional viscous coupling of Fig. 1, the first right plates 108b and the second right plates 109b in the second chamber 112 rotate with respect to each other, whereas the first left plates 108a and the second left plates 109a in the first chamber 111 do not relatively rotate very much. Thus, the relative rotation of the plates 108b and 109b in the second chamber 112 causes thermal expansion of the viscous fluid in the second chamber 112 which sequently flows into the first chamber 111 through the hole 113. This in turn makes the viscous fluid in the second chamber 112 less viscous and less dense so that the torque due to the shear force resulting from shearing of the first and second plates 108b and 109b through the viscous fluid decreases and no hump phenomena occurs. The hump phenomena is a rapid increase of the transmitted torque occurring above a certain inner pressure in the working chamber at which the plates clutch together. The inner pressure increases by heat generated by the fluid friction of the viscous fluid against the plates after relative rotation of the plates for some time

Consequently, with the conventional viscous coupling of Fig. 1 it is not possible to escape from skidding of one of the rear wheels smoothly, so that the running stability of the vehicle is limited.

A viscous coupling has been proposed in US-A-4,064,980 comprising a housing connected to an engine cooling fan and divided into two chambers in each of which is an input member driven from the engine. One of the input members is driven faster than the other. There is pump means operated by dynamic fluid pressure for pumping viscous fluid between the housing and the input member which is driven at the slower speed. If the housing rotates at a higher speed than said slower speed member, viscous fluid is pumped to the chamber containing the input member driven at higher speed and vice-versa. The object of the invention is to provide a higher fan speed at low engine speed and a relatively lower fan speed at higher engine speeds and the pumping of the viscous fluid between the chambers switches the drive to the fan between the input members.

It has also been proposed in DE-A-37 25 103 C1 to have a two-member viscous coupling comprising a housing part and a hub part carrying interleaved plates and pump means which operates to empty the housing part containing the plates when the parts rotate relative to one another in one sense and to fill said housing part when the parts rotate relative to one another in the opposite sense. The object of the invention is substantially to disconnect the parts when the housing is empty and to connect the parts when the housing is full.

## Summary of the invention

It is an object of the present invention to provide a viscous coupling capable, when used to drive the rear wheels of a vehicle of the front engine, front drive type, of preventing a decrease in torque obtained by a shear force within the coupling thereby enabling the vehicle to escape smoothly, by use of the hump phenomenon, from skidding of one of the rear wheels. the running stability of the vehicle is thus improved.

According to the invention we provide a viscous coupling comprising relatively rotatable first, second and third rotary members forming a working space containing a viscous fluid; a dividing member dividing the working space into a first chamber, defined by the dividing member and the first and third rotary members, and a second chamber, defined by the dividing member and the second and third rotary members; and pump means arranged to pump viscous fluid between the chambers; characterised in that the pump means is operated in dependence on relative retation between the first and second rotary members and pumps viscous fluid from the second chamber to the first chamber when the second rotary member rotates faster than the first rotary member and pumps fluid from the first chamber to the second chamber when the first rotary member rotates faster than the second rotary member.

Other features and advantages of the present invention will become apparent from the following description taken in conjunction with the accompanying drawings.

## BRIEF DESCRIPTION OF THE DRAWINGS

Fig. 1 is a cross sectional view of a conventional viscous coupling for a four wheel drive vehicle of front engine, front drive type (FF type).

Fig. 2 is a cross sectional view of one embodiment of a viscous coupling for a four wheel drive vehicle of front engine, front drive type (FF type) according to the present invention.

Fig. 3 is a magnified cross sectional view of the vane pump in the viscous coupling of Fig. 2.

Fig. 4(A) is a schematic diagram of the viscous coupling of Fig. 2 for explaining one situation of the novel operation of the viscous coupling of Fig. 2.

Fig. 4(B) is a horizontal cross sectional view of the vane pump of Fig. 3 for explaining the action of the vane pump in the situation of Fig. 4(A).

Fig. 5(A) is another schematic diagram of the viscous coupling of Fig. 2 for explaining another situation of the novel operation of the viscous coupling of Fig. 2.

Fig. 5(B) is another horizontal cross sectional view of the vane pump of Fig. 3 for explaining the action of the vane pump in the situation of Fig. 5(A).

## DETAILED DESCRIPTION OF THE PREFERRED EMBODIMENTS

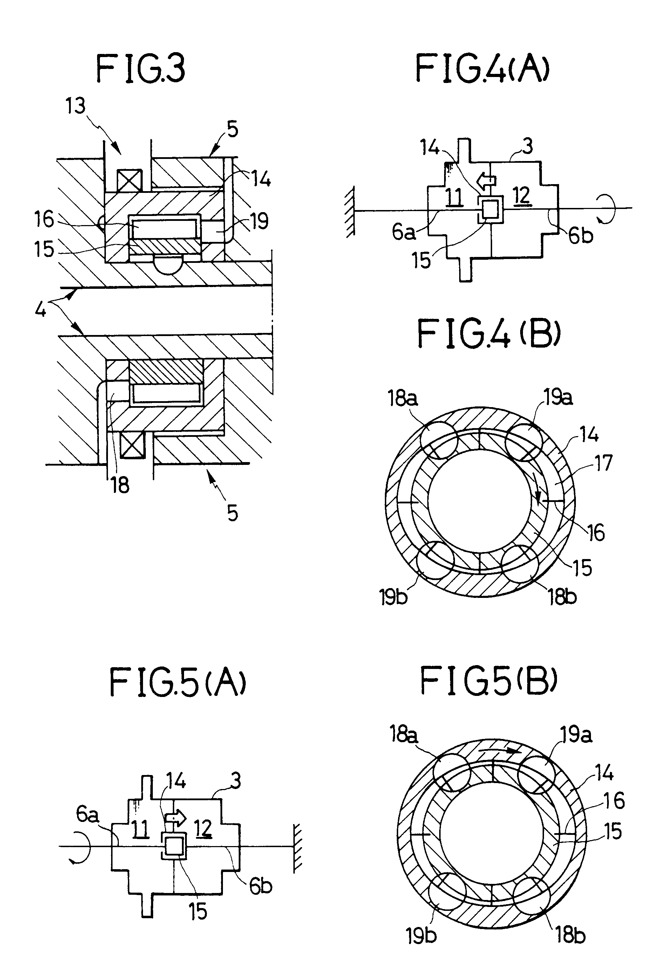

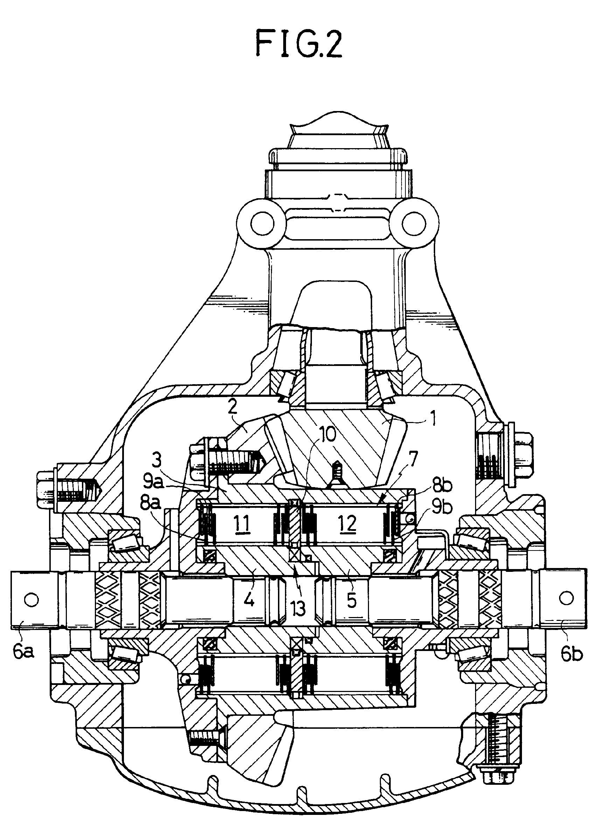

Referring now to Fig. 2, there is shown one embodiment of a viscous coupling according to the present invention. Here, for the sake of explanation, the viscous coupling is assumed to be places between the rear wheels and a propeller shaft in a four wheel drive vehicle of front engine,front drive type (FF type).

In this viscous coupling, there is a driving pinion gear 1 to which torque from an engine is transmitted through the propeller shaft. This driving pinion gear 1 is engaged with a ring gear 2 attached to a diff case 3. Inside the diff case 3, there are first and second hubs 4 and 5 which are relatively coaxially rotatable, and which are connected to left and right rear wheel driving shafts 6a and 6b respectively. The diff case 3 and the first and second hubs 4 and 5 form working chamber 7 in which silicone oil is confined. Inside this working chamber 7 there is a plurality of first left and right plates 8a and 8b which are spline connected to the diff case 3 opposite to the first and second hubs 4 and 5, respectively. In addition, there is a plurality of second left and right plates 9a and 9b, which are spline connected to the first and second hubs 4 and 5 respectively, such that each second plate is between two of adjacent first plates. The working chamber 7 is divided into first and second chambers 11 and 12 by a central divider 10 which has a vane pump 13 which is arranged to pump the silicone oil from one of the first and second chambers 11 and 12 to the other.

The details of this vane pump 13 are shown in Fig. 3 in which the vane pump 13 is shown as having an outer housing 14 spline connected to the second hub 5, a rotor 15 key connected to the first hub 4, and vanes, one of which is shown at 16, depressably attached on the rotor 15. The outer housing 14 has an elliptic inner circumference, the rotor 15 has a circular outer circumference, and the vanes 16 remain in contact with the inner circumference of the outer housing 14 as can be seen from Figs 4(B) and 5(B). The outer housing 14, rotor 15 and adjacent vanee 16 form a chamber 17 whose volume changes as the outer housing 14 and the rotor 15 relatively rotate. This change in volume of the chamber 17 produces in take an exhaust of the silicone oil through a pair of first and second ports 18 and 19 connected to the first and second chambers 11 and 12, respectively.

When a vehicle is running on a high friction road, the torque from the engine is transmitted to a front wheel driving shaft. In this case, there is no difference in the rotational speed between the front wheels and rear wheels so that the viscous coupling between the propeller shaft and the left and right rear wheel driving shafts 6a and 6b does not operate and the vehicle runs in front wheel drive mode.

On the other hand, in a situation where the front wheels skid on a low friction road, there appears a large difference in rotational speed between the front and rear wheels. In such a situation, the diff case 3 connected to the front wheel driving shaft rotates faster than the left and right rear wheel driving shafts 6a and 6b, so that there is a relative rotation between the first left and right plates 8a and 8b connected to the diff case 3 and the second left and right plates 9a and 9b,connected to the left and right rear wheel driving shafts 6a and 6b, which in turn shear through the viscous fluid inside the working chamber 7. The resulting torque due to the shear force of the viscous fluid is transmitted to the left and right rear wheel driving shafts 6a and 6b and provides power for the vehicle to escape from a skid.

Also, as shown in Fig. 4(A), when the right rear wheel skids, a relatively large resistance is felt by the left rear wheel and there appears a difference in rotational speed between the diff case 3 and the first hub 4 connected to the left rear wheel driving shaft 6a. Consequently there is a relative rotation between the first plates 8a and the second plates 9a which in turn shear through the viscous fluid inside the first chamber 11. The first plates 8b and the second plates 9b in the second chamber 12 do not relatively rotate very much, as the right rear wheel which is skidding encounters little resistance. Thus the left rear wheel driving shaft 6a rotates with respect to the right rear wheel driving shaft 6b, causing the rotation of the rotor 15 connected to the first hub 4 with respect to the pump outer pump housing 14 connected to the second hub 5 in a direction indicated by an arrow in Fig. 4(A). As a result, one of the first ports 18 (either 18a or 18b) acts as an exhaust port whereas one of the second ports 19 (either 19a or 19b) acts as an inlet port, so that the silicone oil is pumped from the second chamber 12 through the inlet port 19 and exhausted to the first chamber 11 through the exhaust port 18. This make the silicone oil inside the first chamber 11 more dense so that the torque due do the shear force resulting from shearing of the first left plates 8a and the second left plates 9a through the viscous fluid increases. As a consequence, the hump phenomena occurs in the chamber 11 and the torque transmitted to the left rear wheel driving shaft 6a provides power for the vehicle to escape from skidding of the right rear wheel of the vehicle and the running stability of the vehicle can be improved.

Similarly, as shown in Fig. 5(A), when the left rear wheel skids, a relatively large resistance is felt by the right rear wheel and there appears a difference in rotational speed between the diff case 3 and the second hub 5 connected to the right rear wheel driving shaft 6b. Consequently there is relative rotation between the first plates 8b and the second plates 9b which in turn shear through the viscous fluid inside the second chamber 12. The first plates 8a and the second plates 9a in the first chamber 11 do not relatively rotate very much, as the left rear wheel which is skidding encounters little resistance. Thus the left rear wheel driving shaft 6a rotates with respect to the right rear wheel driving shaft 6b, causing the rotation of the outer housing 14 connected to the second hub 5 with respect to the rotor 15 connected to the first hub 4 in a direction indicated by an arrow in Fig. 5 (A). As a result, on of the first ports 18 (either 18a or 18b) acts as an inlet port whereas one of the second ports 19 (either 19a or 19b) acts as an exhaust port, so that the silicone oil is pumped from the first chamber 11 through the inlet port 18 and exhausted to the second chamber 12 through the exhaust port 19. This makes the silicone oil inside the second chamber 12 more dense so that the torque due to the shear force resulting from shearing of the first plates 8b and the second plates 9b though the viscous fluid increases. As a consequence, the hump phenomena occurs in the chamber 12 and the torque transmitted to the right rear wheel driving shaft 6b provides power for the vehicle to escape from skidding of the left rear wheel of the vehicle, and the running stability of the vehicle can be improved.

Thus, it is possible in this embodiment of a viscous coupling to prevent a decrease in torque due to the shear force, and thereby enabling escape from skidding of one of the rear wheels smoothly by by of the hump phenomena, so that the running stability of the vehicle can be improved.

It is to be noted that the vane pump 13 in the above embodiment may be replaced by a gear pump or an other type of pump.

Besides this, many modifications and variations of the above embodiment may be made without departing from the novel and advantageous features of the present invention. Accordingly, all such modifications and variations are intended to be included within the scope of the appended claims.

## Claims

1. A viscous coupling comprising relatively rotatable first, second and third rotary members (4, 5 and 3) forming a working space (7) containing a viscous fluid; a dividing member (10) dividing the working space into a first chamber (11), defined by the dividing member (10) and the first and third rotary members (4,3) and a second chamber (12), defined by the dividing member (10) and the second and third rotary members (5, 3); and pump means (13) arranged to pump viscous fluid between the chambers (11 and 12),
characterised in that
the pump means (13) is operated in dependence on relative rotation between the first and second rotary members (4, 5) and pumps viscous fluid from the second chamber (12) to the first chamber (11) when the second rotary member (4) rotates faster than the first rotary member (5) and pumps fluid from the first chamber (11) to the second chamber (12) when the first rotary member (5) rotates faster than the second rotary member (4).

2. A viscous coupling according to claim 1,
characterised in that
the pump means (13) is a vane pump.

3. A viscous coupling according to claim 2,
characterised in that
the vane pump (13) comprises a housing (14) connected to one of the rotary members (4, 5) and a rotor (15) connected to the other of the rotary members (4, 5), the housing and the rotor defining a working space (17) therebetween which is connected by ports (18, 19) to the first and second working chambers respectively.

4. A power transmission system of a vehicle including a viscous coupling according to any of the preceding claims wherein the third rotary member is connected to be driven by the engine of the vehicle and the first and second rotary members (4, 5) are respectively connected to road wheel drive shafts (6a, 6b).

5. A power transmission system according to claim 4,
characterised in that
that the road wheel drive shafts (6a, 6b) drive the rear road wheels of the vehicle.

## Patentansprüche

1. Eine Viskokupplung mit relativ drehbaren ersten, zweiten und dritten Drehelementen (4, 5 und 3), die einen mit einer viskosen Flüssigkeit gefüllten Arbeitsraum (7) bilden; eine Trennwand (10), die den Arbeitsraum in eine durch die Trennwand (10) und die ersten und dritten Drehelemente (4, 3) definierte erste Kammer (11) und in eine durch die Trennwand (10) und die zweiten und dritten Drehelemente (5, 3) definierte zweite Kammer (12) unterteilt; und Pumpenmitteln (13), die so angeordnet sind, daß sie Viskoflüssigkeit zwischen den Kammern (11 und 12) pumpen,
dadurch gekennzeichnet,
daß die Pumpenmittel (13) in Abhängigkeit von der relativen Drehung zwischen den ersten und zweiten Drehelementen (4, 5) betätigt werden und Viskoflüssigkeit von der zweiten Kammer (12) zur ersten Kammer (11) pumpen, wenn das zweite Drehelement (4) schneller rotiert als das erste Drehelement (5) und viskose Flüssigkeit von der ersten Kammer (11) in die zweite Kammer (12) pumpen, wenn das erste Drehelement (5) schneller rotiert als das zweite Drehelement (4)

2. Eine Viskokupplung nach Anspruch 1,
dadurch gekennzeichnet,
daß die Pumpenmittel (13) als Flügelzellenpumpe ausgebildet sind.

3. Eine Viskokupplung nach Anspruch 2,
dadurch gekennzeichnet,
daß die Flügelzellenpumpe (13) ein mit einem der Drehelemente (4, 5) verbundenes Gehäuse (14) und einen mit dem anderen Drehelement (4, 5) verbundenen Rotor (15) aufweist, wobei das Gehäuse und der Rotor zwischen sich einen Arbeitsraum (17) bilden , der durch Öffnungen (18, 19) mit der ersten bzw. zweiten Arbeitskammer verbunden ist.

4. Ein mit einer Viskokupplung ausgestattetes Kraftübertragungssystem eines Fahrzeugs nach einem der vorhergehenden Ansprüche, wobei das dritte Drehelement zum Antrieb mit dem Fahrzeugmotor verbunden ist und die ersten und zweiten Drehelemente (4, 5) jeweils mit einer der Fahrzeugantriebswellen (6a, 6b) verbunden sind.

5. Ein Kraftübertragungssystem nach Anspruch 4,
dadurch gekennzeichnet,
daß die Fahrzeugantriebswellen (6a, 6b) die hinteren Räder des Fahrzeugs antreiben.

## Revendications

1. Accouplement visqueux comprenant des premier, second et troisième éléments rotatifs (4, 5 et 3) capables de rotation relative et formant un espace de travail (7) contenant un fluide visqueux, un élément diviseur (10) qui divise l'espace de travail en une première chambre (11) définie par l'élément diviseur (10) et les premier et troisième éléments rotatifs (4, 3) et en une seconde chambre (12) définie par l'élément diviseur (10) et les second et troisième éléments rotatifs (5, 3), et un dispositif de pompage (13) agencé de manière à pomper du fluide visqueux entre les chambres (11 et 12),
caractérisé en ce que

le dispositif de pompage (13) est actionné en fonction de la rotation relative entre les premier et second éléments rotatifs (4, 5) et pompe du fluide visqueux de la seconde chambre (12) dans la première chambre (11) lorsque le second élément rotatif (4) tourne plus vite que le premier élément rotatif (5), et pompe du fluide de la première chambre (11) dans la seconde chambre (12) lorsque le premier élément rotatif (5) tourne plus vite que le second élément rotatif (4).

2. Accouplement visqueux selon la revendication 1,
caractérisé en ce que
le dispositif de pompage (13) est une pompe à palettes.

3. Accouplement visqueux selon la revendication 2,
caractérisé en ce que
que la pompe à palettes (13) comprend un corps (14) relié à l'un des éléments rotatifs (4, 5) et un rotor (15) relié à l'autre des éléments rotatifs (4, 5), le corps et le rotor définissant entre eux un espace de travail (17) qui est relié par des orifices (18, 19) aux première et seconde chambres de travail, respectivement.

4. Système de transmission d'un véhicule, comprenant un accouplement visqueux selon l'une quelconque des revendications précédentes, dans lequel le troisième élément rotatif est fixé de manière à être entraîné par le moteur du véhicule et les premier et second éléments rotatifs (4, 5) sont reliés respectivement aux arbres d'entrainement (6a, 6b) des roues de roulement.

5. Système de transmission selon la revendication 4,
caractérisé en ce que
les arbres d'entrainement (6a, 6b) des roues de roulement entraînent les roues de roulement arrière du véhicule.

# FIG.1
## PRIOR ART

## FIG.3

## FIG.4(A)

## FIG.4 (B)

## FIG.5(A)

## FIG5(B)

# FIG.2